# EUROPÄISCHE PATENTSCHRIFT

(11) **EP 1 532 894 B1**
(45) Veröffentlichungstag und Bekanntmachung des Hinweises auf die Patenterteilung: **19.03.2014**
(21) Anmeldenummer: 04023897.4
(22) Anmeldetag: 07.10.2004
(51) Int. Cl.: A47B 96/14, B25H 3/00, F16B 12/42

(54) **Werkstattwagen**
Tool cart
Chariot d'usine

(30) Priorität: 21.11.2003 DE 20318020 U
(43) Veröffentlichungstag der Anmeldung: 25.05.2005
(73) Patentinhaber: Hazet-Werk Hermann Zerver GmbH & Co. KG, D-42857 Remscheid (DE)
(72) Erfinder: Zerver, Hermann J., 42859 Remscheid (DE)
(74) Vertreter: Ksoll, Peter

(56) Entgegenhaltungen:
- EP-A- 0 670 125
- WO-A-96/32867
- US-A- 5 609 402

## Beschreibung

Die Erfindung betrifft einen Werkstattwagen gemäß den Merkmalen im Oberbegriff des Anspruchs 1.

Ein derartiger Werkstattwagen zählt beispielsweise durch die DE 83 22 475 U1 zum Stand der Technik. Das Gestell des Werkstattwagens setzt sich aus Profilstäben rechteckigen Querschnitts zusammen, die mit von den Oberflächen ausgehenden hinterschnittenen Längsnuten für darin verschiebbare Nutensteine versehen sind. Während die horizontal ausgerichteten Profilstäbe einen quadratischen Querschnitt aufweisen und in jeder Oberfläche eine Längsnut vorgesehen ist, sind die vertikalen Profilstäbe rechteckig mit unterschiedlich breiten Seitenflächen gestaltet. In die Schmalseiten ist jeweils nur eine Längsnute eingearbeitet, während in den Breitseiten jeweils zwei Längsnuten vorgesehen sind.

Die horizontalen Profilstäbe sind außerdem mit zentralen Längsbohrungen ausgerüstet, in denen von den Stirnseiten der Profilstäbe her Gewindeabschnitte ausgebildet sind. Die horizontalen Profilstäbe weisen zwei Längsbohrungen mit endseitigen Gewindeabschnitten auf.

Das Zusammensetzen der horizontalen und vertikalen Profilstäbe erfordert eine größere Anzahl von Koppelelementen. Zur Schaffung eines Werkstattwagens ist folglich ein relativ hoher logistischer Aufwand für die große Anzahl an Einzelteilen erforderlich und zwar sowohl was die Fertigung als auch die Bereitstellung am Ort der Montage betrifft.

Aus der WO 96/32867 A ist eine modulare Aufbewahrungs- und Aufnahmeanordnung bekannt, bei der die Seitenteile aus Platten ausgebildet sind, die vertikal an den Rahmenelementen befestigt werden können.

Der Erfindung liegt - ausgehend vom Stand der Technik - die Aufgabe zugrunde, einen Werkstattwagen zu schaffen, der einfach aufgebaut ist, aus wenigen Einzelteilen besteht und nach dem Baukastenprinzip problemlos gefertigt werden kann.

Diese Aufgabe wird nach der Erfindung mit den im Anspruch 1 angegebenen Merkmalen gelöst.

Kernpunkt der Erfindung bildet die Maßnahme, dass nunmehr speziell ausgebildete Vertikalholme zum Einsatz gelangen. Diese weisen hinterschnittene Längsnuten auf, die in die Oberflächen münden. Die Längsnuten sind so auf die darin verschiebbaren Nutensteine abgestimmt, dass die Nutensteine nicht nur in Längsrichtung verschoben werden können, sondern dass sie auch durch die Mündungsschlitze der Längsnuten quer in die Längsnuten eingesetzt werden können. Mit Hilfe der Nutensteine und in den Nutensteinen vorgesehenen Gewinden können dann beliebig gestaltete Anbauteile an den Vertikalholmen festgelegt werden.

Ferner sind von den äußeren Oberflächen her im Wesentlichen radial ausgerichtete Längsschlitze in die Vertikalholme eingearbeitet. In die Längsschlitze werden die vertikalen Randbereiche von Wandelementen eingeschoben. Dazu brauchen die Randbereiche nur in dem jeweilig erforderlichen Winkel zur übrigen Fläche der Wandelemente abgekantet zu werden.

Darüber hinaus sind in den Vertikalholmen auf einem Teilkreis zueinander versetzte Längskanäle vorgesehen, die in die Stirnseiten münden. Die Enden der Längskanäle dienen der Aufnahme von Schrauben, beispielsweise von selbstschneidenden Schrauben, über welche die Vertikalholme mit weiteren Gestellelementen zu einem biege- und verwindungssteifen Gestell vervollständigt werden können.

Die Vertikalholme können trotz der hohen Verwindungs- und Biegesteifheit dennoch vergleichsweise leicht ausgebildet werden, insbesondere wenn sie aus Aluminium oder einer Aluminiumlegierung bestehen, da die die Längsnuten, die Längsschlitze und die Längskanäle begrenzenden Wandabschnitte in der Dicke auf ein Mindestmaß beschränkt werden können. Insgesamt weisen die Vertikalholme eine filigrane Querschnittskontur auf.

Die Vertikalholme können grundsätzlich in unterschiedlichen Oberflächenqualitäten ausgeführt sein, z.B. eloxiert, poliert, gesandstrahlt oder ähnlich.

Die Längsnuten, ebenso wie die Längsschlitze, können zum Anbau diverser Komponenten genutzt werden, beispielsweise von Türen, Griffen, Haltern oder Abdeckungen.

Das Gestell des erfindungsgemäßen Werkstattwagens ist geeignet zur Aufnahme von verschiedenen Einbaukomponenten, beispielsweise Schubladen, Einlegeböden und Fächern mit Klappen oder Türen. Von besonderem Vorteil ist ferner, dass eine modulare Erweiterung des Gestells möglich ist, insbesondere durch den Anbau gleichartig gestalteter Seitenteile.

Entsprechend den Merkmalen des Anspruchs 2 können die Vertikalholme einen runden Querschnitt aufweisen.

Denkbar ist aber auch ein sechseckiger Querschnitt gemäß den Merkmalen des Anspruchs 3.

Des Weiteren können die Vertikalholme nach Anspruch 4 einen achteckigen Querschnitt aufweisen.

Die Merkmale des Anspruchs 5 tragen mit dazu bei, dass das Gewicht der Vertikalholme noch mehr verringert werden kann.

Die Radialstege entsprechend Anspruch 6 bewirken eine Erhöhung der Verwindungs- und Biegesteifigkeit der Vertikalholme bei dennoch geringem Materialeinsatz.

Mit den Merkmalen des Anspruchs 7 ist der besondere Vorteil verbunden, dass in die durch die Stirnseiten der Radialstege gebildeten Aufnahmebereiche Stäbe eingeführt werden können, die oberhalb des eigentlichen Gestells als Halterungen für beliebige Werkstücke, wie beispielsweise Scheiben für Kraftfahrzeuge, dienen.

Die Anordnung der Längsnuten gemäß Anspruch 8 erlaubt es, die Vertikalholme so in die Eckbereiche eines Gestells einzugliedern, dass die neben den Längsnuten verlaufenden Längsschlitze in optimaler Weise zum Einführen der abgekanteten Randbereiche der Wandelemente herangezogen werden können. Eine derartige Anordnung der Längsnuten wird zweckmäßig bei einem runden oder achteckigen Querschnitt der Vertikalholme vorgesehen.

Aufgrund der Zuordnung von drei Längskanälen zu den Längsnuten entsprechend den Merkmalen des Anspruchs 9 können in den mit den Vertikalholmen stirnseitig verbindbaren Gestellelementen vorab Bohrungen auf einem Teilkreis vorgesehen werden, die beispielsweise in einem Rastermaß von 30° oder 60° angeordnet sind. Dies ermöglicht eine große Variationsbreite im Hinblick auf das der Erfindung zugrunde liegende Baukastenprinzip. Vorteilhaft sind die beiden zwischen den um jeweils 90° zueinander versetzten Längsnuten angeordneten Längskanäle zueinander um 90° versetzt, so dass sie zu dem dritten Längskanal jeweils um 135° versetzt angeordnet sind.

Weisen die Vertikalholme einen sechseckigen Querschnitt auf, so ist es entsprechend den Merkmalen des Anspruchs 10 von Vorteil, dass zwei um 180° zueinander versetzte Längsnuten vorgesehen sind.

Das Rastermaß von 15° der Längsschlitze zwischen den Längsnuten eines runden Vertikalholms (Anspruch 11) erlaubt ebenfalls eine große Variationsmöglichkeit für die Festlegung der abgekanteten Randbereiche von Wandelementen.

Entsprechend den Merkmalen des Anspruchs 12 sind bei einem sechs- oder achteckigen Vertikalholm die in eine Längsseite des Vertikalholms mündenden Längsschlitze parallel nebeneinander vorgesehen. Dabei hat es sich als zweckmäßig erwiesen, dass in jede Längsseite drei Längsschlitze münden.

Um den in die Längsschlitze einschiebbaren Wandelementen einen noch besseren Halt zu geben, insbesondere aber um Kantenschutzprofile aus Kunststoff bzw. einem gummielastischen Material am Vertikalholm festzulegen, weisen die Seitenwände der Längsschlitze gemäß Anspruch 13 im Querschnitt trapezförmige Längsrinnen auf. Diese sind so gestaltet, dass die Wandabschnitte zwischen zwei Längsschlitzen im Querschnitt hammerkopfartig gestaltet sind. Insbesondere ein Kantenschutzprofil kann so mit einem nach innen gerichteten Haltesteg an den Längsschlitzen festgelegt werden, wobei der Haltesteg mit Gegenflächen in die Hinterschneidungen der Längsschlitze greift.

Ein besonders einfaches Gestell für einen Werkstattwagen wird nach Anspruch 14 dadurch gebildet, dass die Stirnseiten der Vertikalholme mit einer Bodenplatte und einer Deckplatte verschraubt sind. Das Gestell erfährt auf diese Weise eine ausreichende Stabilität im Hinblick auf die zu erfüllenden Aufgaben. Außerdem können in der Deckplatte Bohrungen vorgesehen werden, die mit dem Teilkreis fluchten, auf welchem die Stirnseiten der Radialstege im Inneren der Vertikalholme liegen. Stirnseitig der Vertikalholme sind auf einem Teilkreis Gewindebohrungen im Rastermaß von z.B. 30° oder 60° angeordnet. Diese dienen einerseits der Verbindung der Vertikalholme mit der Deckplatte und andererseits auch der zusätzlichen Fixierung von Werkstückhalterungen.

Ein weiterer Vorteil der Erfindung liegt darin, dass die Wandelemente nicht nur an den Vertikalholmen, sondern auch an der Bodenplatte und der Deckplatte sicher fixiert werden können. Es handelt sich um reine Steckverbindungen, welche außerdem die Montage des Werkstattwagens erleichtern.

Die Ausbildung der Vertikalholme mit Längsschlitzen gestattet es nach Anspruch 15 bei einem im horizontalen Querschnitt rechteckigen Werkstattwagen, dessen Schmalseiten mit jeweils zwei oder mehr im Abstand zueinander angeordneten Wandelementen auszurüsten. Die äußeren Wandelemente dienen hierbei vorzugsweise der Optik des Werkstattwagens. Die inneren Wandelemente können mit Führungen für Schubfächer ausgerüstet werden. Außerdem ist es möglich, jedenfalls zumindest ein äußeres Wandelement so zwischen zwei Vertikalholmen anzuordnen, dass seine Fläche gegenüber einer Schmalseite einwärts versetzt ist. Dieses Wandelement kann dann mit rasterartigen Ausnehmungen versehen sein, in die Halter für diverse Gegenstände, wie z.B. Papierrollen, Werkzeugen und Kabeltrommeln eingehängt werden können.

Um den Werkstattwagen gezielt verlagern zu können, ist nach Anspruch 17 an zwei benachbarten Vertikalholmen ein Handgriff befestigt. Dies kann über die Längsnuten und die darin verschiebbaren Nutensteine erfolgen. Die Höhe des Handgriffs kann dadurch ergonomisch eingestellt werden.

Die Bodenplatte kann vergleichsweise stabil ausgebildet werden, so dass gemäß den Merkmalen des Anspruchs 18 unter die Bodenplatte Konsolen mit Laufrollen angeordnet werden können. Hierbei ist es zweckmäßig, dass mindestens zwei dieser Konsolen um vertikale Achsen drehbar sind. Auch können diese Konsolen mit Feststellvorrichtung für die Laufrollen versehen sein.

Werden die mit den Stirnseiten der inneren Radialstege fluchtenden Bohrungen in der Deckplatte nicht benötigt, so ist es nach Anspruch 19 zweckmäßig, dass auf der Deckplatte eine Arbeitsplatte angeordnet ist. Diese Arbeitsplatte bildet einen formschönen und auch auf die jeweilige Aufgabe abstellbaren oberen Abschluss des Werkstattwagens.

Falls erforderlich, kann die Deckplatte mit entsprechenden Öffnungen zur Durchführung bzw. zum Einstecken von Werkzeughalterungen in die Aufnahmebereiche der Vertikalholme versehen sein.

Mindestens ein Vertikalholm kann bereichsweise mit einem äußeren Kantenschutz versehen sein, wie dies Schutzanspruch 20 vorsieht. Diese Maßnahme soll Beschädigungen am bzw. durch den Werkstattwagen vorbeugen. Der Kantenschutz wird hierbei in den Längsnuten und/oder in den Längsschlitzen festgelegt. Zweckmäßig besteht der Kantenschutz aus einem elastisch nachgiebigem Material, beispielsweise Kunststoff.

Die Erfindung ist nachfolgend anhand von in den Figuren dargestellten Ausführungsbeispielen näher beschrieben. Es zeigen:
- Figur 1: in der Perspektive einen Werkstattwagen;
- Figur 2: in der Perspektive den Werkstattwagen der Figur 1 während einer Montagesituation;
- Figur 3: in der Perspektive den Werkstattwagen der Figuren 1 und 2 in einer weiteren Montagesituation;
- Figur 4: den Werkstattwagen der Figur 3 in der Draufsicht;
- Figur 5: in vergrößerter Darstellung den Ausschnitt V der Figur 4 ;
- Figur 6: in nochmals vergrößerter Darstellung einen horizontalen Querschnitt durch einen Vertikalholm des Werkstattwagens der Figuren 1 bis 5 und
- Figuren 7 bis 9: in vergrößerter schematischer Darstellung die Stirnseiten von Vertikalholmen gemäß drei weiteren Ausführungsformen.

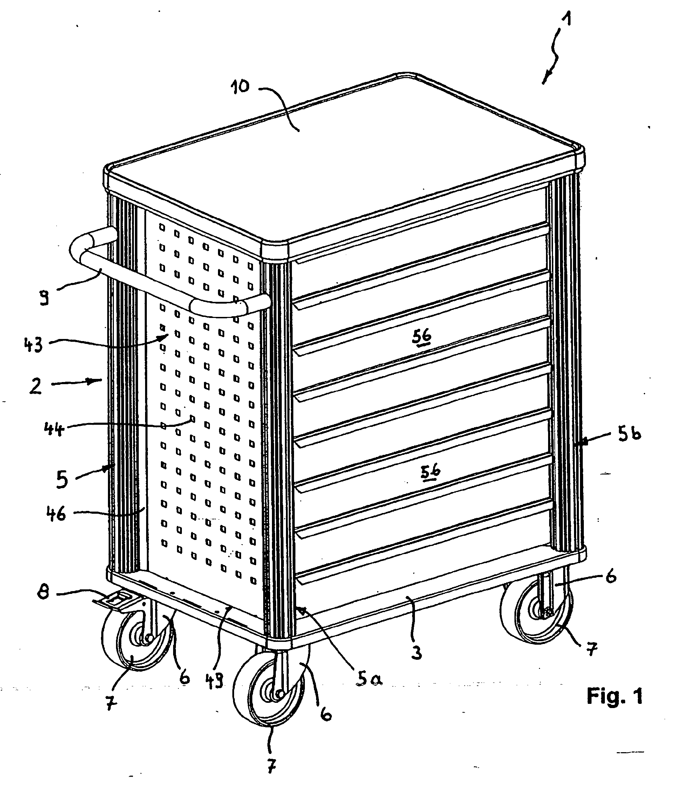

Mit 1 ist in der Figur 1 ein Werkstattwagen bezeichnet, wie er insbesondere zur Aufnahme und Ablage von Werkzeugen, beispielsweise in einem Kraftfahrzeugbetrieb dient.

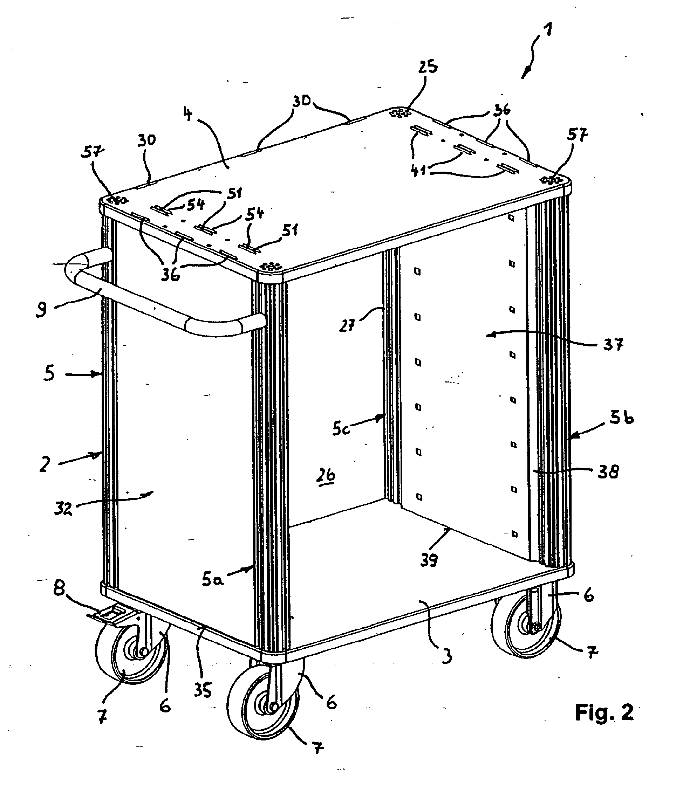

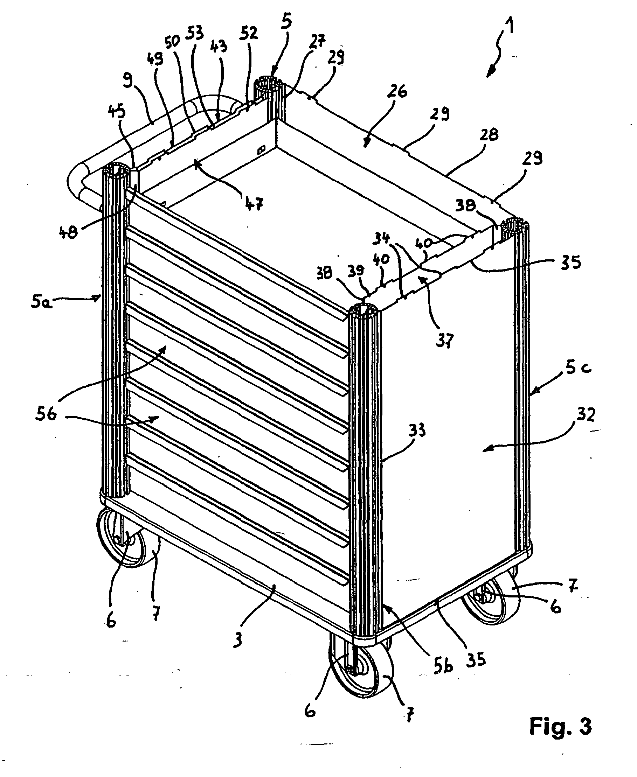

Der Werkstattwagen 1 umfasst ein Gestell 2 aus einer Bodenplatte 3 und einer Deckplatte 4 (siehe auch Figuren 2 und 3), die durch vier um 90° zueinander versetzte, profilierte Vertikalholme 5, 5a, 5b, 5c zueinander distanziert sind.

Unter der Bodenplatte 3 befinden sich vier Konsolen 6 mit Laufrollen 7, von denen zwei Konsolen 6 um vertikale Achsen drehbar sind. Eine drehbare Konsole 6 ist mit einer Feststellvorrichtung 8 für die Laufrolle 7 versehen.

An einer Schmalseite des im horizontalen Querschnitt rechteckigen Werkstattwagens 1 ist ein U-förmiger Handgriff 9 an den Vertikalkonsolen 5, 5a befestigt.

Auf die Deckplatte 4 ist eine Arbeitsplatte 10 aufgesetzt (Figur 1).

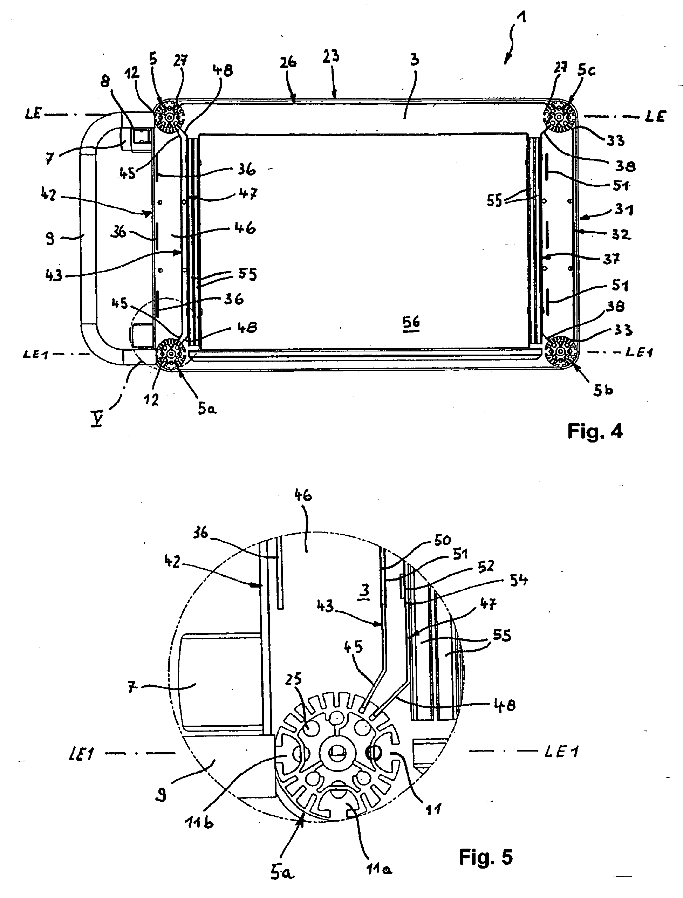

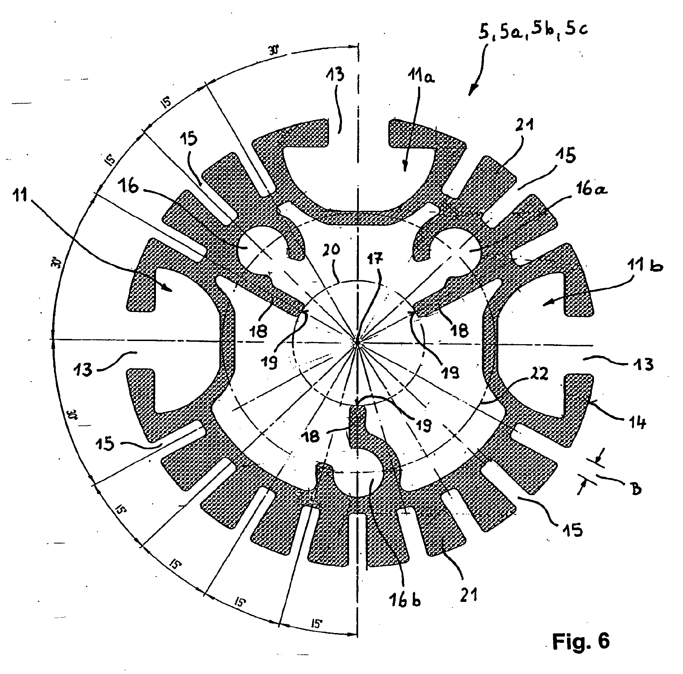

Wie insbesondere die Figur 6 zu erkennen gibt, ist jeder Vertikalholm 5, 5a, 5b, 5c als Rundprofil aus einem Aluminiumpressstrang abgeteilt. Er weist umfangsseitig drei um 90° zueinander versetzte hinterschnittene Längsnuten 11, 11a, 11b für darin verschiebbare, der Figur 4 entnehmbare Nutensteine 12 auf. Von den drei Längsnuten 11, 11a, 11b sind zwei Längsnuten 11, 11b um 180° zueinander versetzt, während die dritte Längsnute 11 a um jeweils 90° zu den beiden anderen Längsnuten 11, 11b versetzt ist. Die Mündungsschlitze 13 der Längsnuten 11, 11a, 11b enden in der äußeren Oberfläche 14 jedes Vertikalholms 5, 5a, 5b, 5c.

In den Bereichen zwischen den Längsnuten 11, 11a, 11b sind von der äußeren Oberfläche 14 ausgehend, Längsschlitze 15 eingearbeitet. Die Längsschlitze 15 sind um 15° zueinander versetzt angeordnet.

Jeweils mittig zwischen den Längsnuten 11, 11a, 11b sind in die Stirnseiten jedes Vertikalholms 5, 5a, 5b, 5c mündende, im Querschnitt kreisförmige Längskanäle 16, 16a, 16b vorgesehen. Diese Längskanäle 16, 16a, 16b sind zur Längsachse 17 jedes Vertikalholms 5, 5a, 5b, 5c hin offen. Die zwischen den Längsnuten 11, 11a bzw. 11a, 11b liegenden Längskanäle 16, 16a sind zueinander um 90° versetzt, während der dritte Längskanal 16b zu den beiden anderen Längskanälen 16, 16a um jeweils 135° versetzt angeordnet ist.

Neben den Längskanälen 16, 16a, 16b erstrecken sich um 120° zueinander versetzte Radialstege 18 zur Längsachse 17 hin. Die Stirnseiten 19 der Radialstege liegen auf einem Teilkreis 20.

Mit Ausnahme der Bereiche 21 zwischen zwei Längsschlitzen 15 sind die übrigen Wanddicken der Vertikalholme 5, 5a, 5b, 5c etwa gleich der Breite B eines Längsschlitzes 15 bemessen. Die Wanddicke der Bereiche 21 zwischen zwei Längsschlitzen 15 entspricht etwa der doppelten Breite B eines Längsschlitzes 15.

Auch die Längskanäle 16, 16a, 16b erstrecken sich auf einem Teilkreis 22, der zu dem Teilkreis 20 der Stirnseiten 19 der Radialstege 18 konzentrisch angeordnet ist.

Wie die Figuren 4 und 5 zu erkennen geben, sind die vier Vertikalholme 5, 5a, 5b, 5c so den Eckbereichen des Werkstattwagens 1 zugeordnet, dass die um 180° zueinander versetzten Längsnuten 11, 11b sich in zwei vertikalen Längsebenen LE-LE bzw. LE1-LE1 erstrecken, während die jeweils dritten Längsnuten 11a zur Rückseite 23 bzw. Vorderseite 24 des Werkstattwagens 1 gerichtet sind. Diese Anordnung der Vertikalholme 5, 5a, 5b, 5c ist dadurch möglich, dass in den Eckbereichen der Bodenplatte 3 und der Deckplatte 4 (siehe insbesondere die Figuren 2 und 5) auf einem Teilkreis liegende Bohrungen 25 vorgesehen sind. Über diese Bohrungen 25 können nach entsprechender Verdrehung der Vertikalholme 5, 5a, 5b, 5c selbstschneidende Schrauben eingeführt und in die Enden der Längskanäle 16, 16a, 16b eingedreht werden.

Zwischen den beiden Vertikalholmen 5, 5c erstreckt sich ein in der Fläche geschlossenes Wandelement 26 mit zwei einwärts abgewinkelten Randbereichen 27 (Figur 3 und 4). Diese Randbereiche 27 sind in zwei Längsschlitze 15 der Vertikalholme 5, 5c eingefügt.

Am oberen und unteren Längsrand 28 weist das Wandelement 26 zungenartige Vorsprünge 29 auf, die in an die Vorsprünge 29 angepasste Schlitze 30 in der Bodenplatte 3 und der Deckplatte 4 zentrierend eingreifen. Das Wandelement 26 ist damit ausschließlich über Steckverbindungen lagefixiert.

An der dem Handgriff 9 abgewandten Schmalseite 31 des Werkstattwagens 1 ist ein in der Fläche geschlossenes äußeres Wandelement 32 vorgesehen (Figur 2 bis 4), das mit einwärts abgekanteten Randbereichen 33 in Längsschlitze 15 der Vertikalholme 5b, 5c und mit zungenartigen Vorsprüngen 34 an den oberen und unteren Längsrändern 35 in daran angepasste Schlitze 36 der Bodenplatte 3 und der Deckplatte 4 eingreift.

Parallel zu dem äußeren Wandelement 32 ist ein in der Fläche geschlossenes inneres Wandelement 37 vorgesehen, das über nach außen abgekantete Randbereiche 38 in Längsschlitze 15 der Vertikalholme 5b, 5c und mit an den oberen und unteren Längsrändern 39 vorgesehene zungenartige Vorsprünge 40 in Schlitze 41 der Bodenplatte 3 und der Deckplatte 4 eingreift.

An der dem Handgriff 9 benachbarten Schmalseite 42 des Werkstattwagens 1 ist bei der Ausführungsform der Figuren 1 und 3 bis 5 ein äußeres Wandelement 43 mit rasterartigen Ausnehmungen 44 vorgesehen. Dieses Wandelement 43 ist mit nach außen abgekanteten Randbereichen 45 so in die Längsschlitze 15 der Vertikalholme 5, 5a eingefügt, dass zwischen der Schmalseite 42 des Werkstattwagens 1 und dem Wandelement 43 ein Freibereich 46 gebildet wird. Das Wandelement 43 fasst mit an den oberen und unteren Längsrändern 49 vorgesehenen zungenartigen Vorsprüngen 50 in daran angepasste Schlitze 51 in der Bodenplatte 3 und in der Deckplatte 4.

Parallel zu diesem Wandelement 43 ist ein weiteres inneres Wandelement 47 vorgesehen, das mit nach außen abgekanteten Randbereichen 48 in Längsschlitze 15 der Vertikalholme 5, 5a fasst. Auch dieses Wandelement 47 fasst mit zungenartigen Vorsprüngen 52 an den oberen und unteren Längsrändern 53 in daran angepasste Schlitze 54 in der Bodenplatte 3 und der Deckplatte 4 ein.

Die beiden inneren Wandelemente 37, 47 an den Schmalseiten 31, 42 des Werkstattwagens 1 sind mit inneren Führungen 55 (Figur 4 und 5) für übereinander liegende Schubfächer 56 ausgerüstet.

Die Figuren 2 und 6 lassen bei gemeinsamer Betrachtung noch erkennen, dass durch die Stirnseiten 19 der Radialstege 18 und durch zu den die Stirnseiten 19 schneidenden Teilkreisen 20 fluchtend angeordnete Bohrungen 57 in der Deckplatte 4 Aufnahmebereiche für nicht näher veranschaulichte Werkstückhalterungen gebildet werden.

In der Figur 2 ist an der dem Handgriff 9 benachbarten Schmalseite 42 des Werkstattwagens 1 ein äußeres Wandelement 32 veranschaulicht, das, wie das äußere Wandelement 32, an der anderen Schmalseite in der Fläche geschlossen und auch entsprechend in die Längsschlitze 15 der Vertikalholme 5, 5a gefügt ist. Es besitzt ferner an dem unteren und oberen Längsrand 35 zungenartige Vorsprünge 34, die in Schlitze 36 der Bodenplatte 3 und der Deckplatte 4 eingreifen.

Die Figur 4 lässt noch erkennen, dass aus Symmetriegründen und im Hinblick auf das angestrebte Baukastenprinzip an den Schmalseiten 31 und 42 des Werkstattwagens 1 sowohl in der Bodenplatte 3 als auch in der Deckplatte 4 Schlitze 36, 41, 51 und 54 vorgesehen sind.

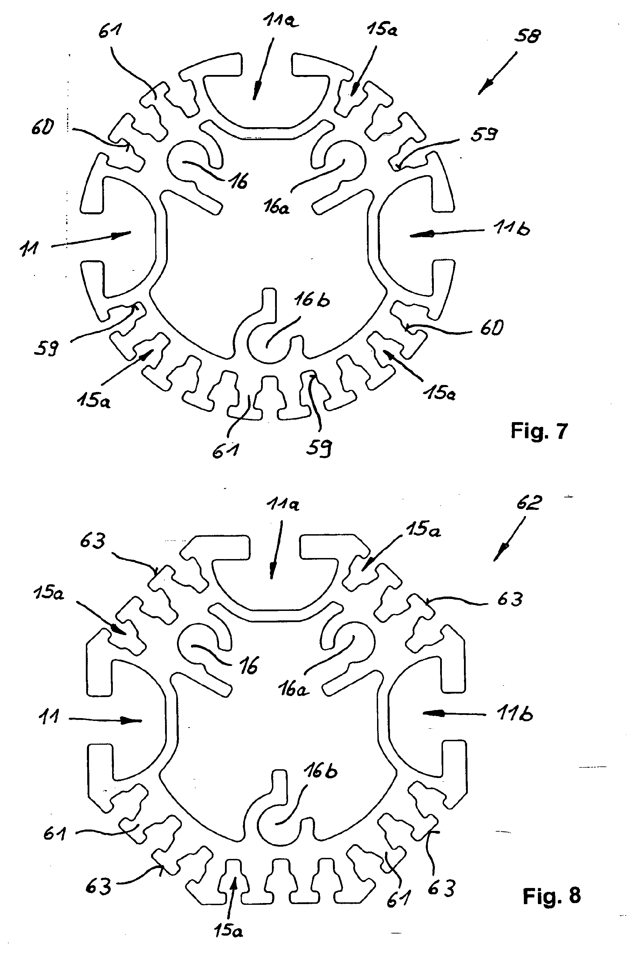

Die in der Figur 7 veranschaulichte Ausführungsform eines Vertikalholms 58 entspricht weitgehend der Konfiguration des Vertikalholms 5, 5a-c der Figur 6. Im Unterschied zu der Ausführungsform der Figur 6 sind jedoch bei der Ausführungsform der Figur 7 die Seitenwände 59 der Längsschlitze 15a mit im Querschnitt trapezförmigen Längsrinnen 60 versehen. Dadurch erhalten die Wandabschnitte zwischen zwei Längsschlitzen 15a einen annähernd hammerkopfartigen Querschnitt.

Die Figur 8 zeigt einen Vertikalholm 62, der prinzipiell dem Vertikalholm 58 der Figur 7 entspricht. Der Unterschied besteht lediglich darin, dass der Vertikalholm 62 der Figur 8 einen achteckigen Querschnitt besitzt. Die Längsschlitze 15a, welche in die Längsseiten 63 des Vertikalholms 62 münden, sind dadurch parallel nebeneinander angeordnet. Es münden jeweils drei Längsschlitze 15a in jede Längsseite 63 des Vertikalholms 62.

Obwohl die Längsschlitze 15a der Ausführungsform der Figur 8 einen Querschnitt aufweisen, der dem Querschnitt der Längsschlitze 15a der Figur 7 entspricht, können die Längsschlitze 15a der Ausführungsform der Figur 8 auch einen Querschnitt aufweisen, den die Längsschlitze 15 der Ausführungsform der Figur 6 besitzen.

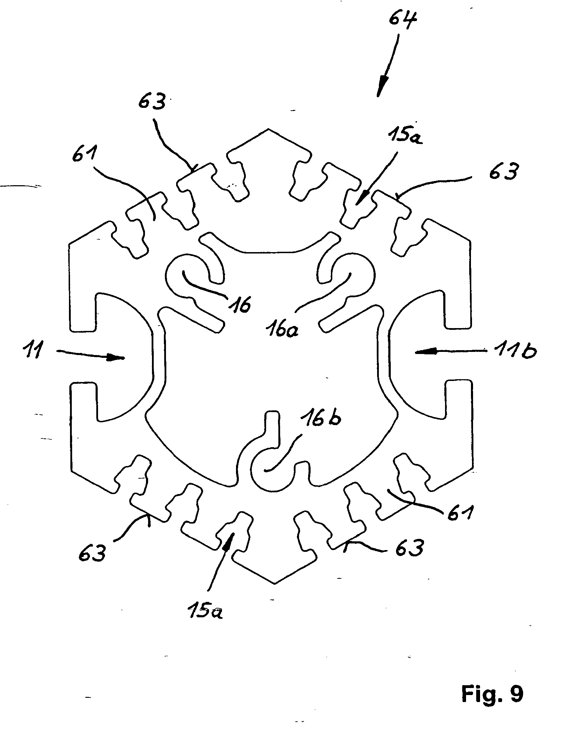

Im Falle der Ausführungsform der Figur 9 eines Vertikalholms 64 sind lediglich zwei um 180° zueinander versetzte Längsnuten 11, 11b vorgesehen. In die Längsseiten 63 des sechseckigen Vertikalholms 64 münden wieder parallel nebeneinander sich erstreckende Längsschlitze 15a, bevorzugt jeweils drei Längsschlitze 15a, mit einem Querschnitt, der dem Querschnitt der Ausführungsformen von Vertikalholmen 58, 62 der Figuren 7 und 8 entspricht.

Auch bei der Ausführungsform der Figur 9 ist es denkbar, dass die Längsschlitze 15a einen Querschnitt aufweisen, wie ihn die Längsschlitze 15 der Ausführungsform der Figur 6 besitzen.

### Bezugszeichenaufstellung

- 1 -: Werkstattwagen
- 2 -: Gestell von 1
- 3 -: Bodenplatte von 2
- 4 -: Deckplatte von 2
- 5 -: Vertikalholm
- 5a -: Vertikalholm
- 5b -: Vertikalholm
- 5c -: Vertikalholm
- 6 -: Konsolen
- 7 -: Laufrollen
- 8 -: Feststellvorrichtung
- 9 -: Handgriff
- 10 -: Arbeitsplatte
- 11 -: Längsnut
- 11a -: Längsnut
- 11b -: Längsnut
- 12 -: Nutensteine
- 13 -: Mündungsschlitze von 11, 11a, 11b
- 14 -: Oberfläche von 5, 5a, 5b, 5c
- 15 -: Längsschlitze
- 15a -: Längsschlitze in 58
- 16 -: Längskanal
- 16a -: Längskanal
- 16b -: Längskanal
- 17 -: Längsachse von 5, 5a, 5b, 5c
- 18 -: Radialstege
- 19 -: Stirnseite von 18
- 20 -: Teilkreis von 19
- 21 -: Bereiche zwischen 15
- 22 -: Teilkreis von 16, 16a, 16b
- 23 -: Rückseite von 1
- 24 -: Vorderseite von 1
- 25 -: Bohrungen
- 26 -: Wandelement
- 27 -: Randbereiche von 26
- 28 -: Längsrand an 28
- 29 -: Vorsprünge an 28
- 30 -: Schlitze für 29
- 31 -: Schmalseite von 1
- 32 -: Wandelement
- 33 -: Randbereiche von 32
- 34 -: Vorsprünge an 35
- 35 -: Längsränder von 32
- 36 -: Schlitze für 34
- 37 -: Wandelement
- 38 -: Randbereiche von 37
- 39 -: Längsränder von 37
- 40 -: Vorsprünge an 39
- 41 -: Schlitze für 40
- 42 -: Schmalseite von 1
- 43 -: Wandelement
- 44 -: Ausnehmungen in 43
- 45 -: Randbereiche von 43
- 46 -: Freibereich zwischen 42 und 43
- 47 -: Wandelement
- 48 -: Randbereiche von 47
- 49 -: Längsränder von 43
- 50 -: Vorsprünge an 49
- 51 -: Schlitze für 56
- 52 -: Vorsprünge an 53
- 53 -: Längsränder von 47
- 54 -: Schlitze für 52
- 55 -: Führungen für 56
- 56 -: Schubfächer
- 57 -: Bohrungen in 4
- 58 -: Vertikalholm
- 59 -: Seitenwände v. 15a
- 60 -: Längsrinnen in 59
- 61 -: Wandabschnitte zw. 15a
- 62 -: Vertikalholm
- 63 -: Längsseiten v. 62
- 64 -: Vertikalholm

- B -: Breite von 15
- LE -: Längsebene
- LE1 -: Längsebene

## Patentansprüche

1. Werkstattwagen, insbesondere zur Aufnahme von Werkzeugen, der ein rollend verlagerbares Gestell (2) mit vier um jeweils 90° zueinander versetzten profilierten Vertikalholmen (5, 5a, 5b, 5c, 58, 62, 64) aufweist, die jeweils umfangsseitig hinterschnittene Längsnuten (11, 11a, 11b) für darin verschiebbare Nutensteine (12) sowie im Wesentlichen radial ausgerichtete Längsschlitze (15, 15a) besitzen, **dadurch gekennzeichnet, dass** jeder Vertikalholm (5, 5a, 5c, 58, 62, 64) Längsschlitze (15, 15a) für die Randbereiche (27, 33, 38, 45, 48) von Wandelementen (26, 32, 37, 43, 47) und in seine Stirnseiten mündende, auf einem Teilkreis (22) zueinander versetzte Längskanäle (16, 16a, 16b) zum Einsetzen von Befestigungsschrauben aufweist.

2. Werkstattwagen nach Anspruch 1, **dadurch gekennzeichnet, dass** Vertikalholme (5, 5a-c, 58) mit einem runden Querschnitt vorgesehen sind.

3. Werkstattwagen nach Anspruch 1, **dadurch gekennzeichnet, dass** Vertikalholme (64) mit einem sechseckigen Querschnitt vorgesehen sind.

4. Werkstattwagen nach Anspruch 1, **dadurch gekennzeichnet, dass** Vertikalholme (62) mit einem achteckigen Querschnitt vorgesehen sind.

5. Werkstattwagen nach einem der Ansprüche 1 bis 4, **dadurch gekenn- zeichnet,** dass die Längskanäle (16, 16a, 16b) zur Längsachse (17) des Vertikalholms (5, 5a-c, 58, 62, 64) hin offen sind.

6. Werkstattwagen nach einem der Ansprüche 1 bis 5, **dadurch gekenn- zeichnet**, dass sich neben den Längskanälen (16, 16a, 16b) zur Längsachse (17) hin gerichtete, um 120° zueinander versetzte Radialstege (18) erstrecken.

7. Werkstattwagen nach Anspruch 6, **dadurch gekennzeichnet, dass** die auf einem Teilkreis (20) angeordneten Stirnseiten (19) der Radialstege (18) einen Aufnahmebereich für eine Werkstückhalterung bilden.

8. Werkstattwagen nach einem der Ansprüche 1 bis 7, **dadurch gekenn- zeichnet,**dass drei Längsnuten (11, 11a, 11b) vorgesehen sind, von denen zwei Längsnuten (11, 11b) um 180° zueinander versetzt sind und die dritte Längsnute (11a) um jeweils 90° zu den beiden anderen Längsnuten (11, 11 b) versetzt ist.

9. Werkstattwagen nach einem der Ansprüche 1 bis 8, **dadurch gekenn- zeichnet**, dass drei Längskanäle (16, 16a, 16b) vorgesehen sind, von denen sich zwei Längskanäle (16, 16a) zwischen den um jeweils 90° zueinander versetzten Längsnuten (11, 11a bzw.11 a, 11b) befinden und der dritte Längskanal (16b) zwischen den um 180° versetzten Längsnuten (11, 11b) angeordnet ist.

10. Werkstattwagen nach einem der Ansprüche 1 bis 7, **dadurch gekennzeichnet, dass** zwei um 180° zueinander versetzte Längsnuten (11, 11b) vorgesehen sind.

11. Werkstattwagen nach einem der Ansprüche 1 bis 10, **dadurch gekennzeichnet, dass** bei einem runden Vertikalholm (5, 5a-c) die sich zwischen den Längsnutzen (11, 11a, 11b) erstreckenden Längsschlitze (15) zueinander um jeweils 15° versetzt sind.

12. Werkstattwagen nach einem der Ansprüche 1 bis 10, **dadurch gekenn- zeichnet**, dass bei einem sechs- oder achteckigen Vertikalholm (62, 64) die in eine Längsseite (63) mündenden Längsschlitze (15a) parallel nebeneinander vorgesehen sind.

13. Werkstattwagen nach einem der Ansprüche 1 bis 12, **dadurch gekennzeichnet, dass** die Längsseiten (63) der Längsschlitze (15a) mit im Querschnitt trapezförmigen Längsrinnen (60) versehen sind.

14. Werkstattwagen nach einem der Ansprüche 1 bis 13, **dadurch gekennzeichnet, dass** die Stirnseiten der Vertikalholme (5, 5a-c, 58, 62, 64) mit einer Bodenplatte (3) und einer Deckplatte (4) verschraubt sind.

15. Werkstattwagen nach einem der Ansprüche 1 bis 14, **dadurch gekenn- zeichnet**, dass an zwei einander gegenüber liegenden Seiten (31, 42) des Gestells (2) jeweils zwei Wandelemente (32, 37; 43, 47) sich nebeneinander erstreckend vorgesehen sind, von denen die inneren Wandelemente (37, 47) mit Führungen (55) für Schubfächer (56) ausgerüstet sind.

16. Werkstattwagen nach einem der Ansprüche 1 bis 15, **dadurch gekenn-zeichnet**, dass an zwei benachbarten Vertikalholmen (5, 5a, 58, 62, 64) ein Handgriff (9) befestigt ist.

17. Werkstattwagen nach einem der Ansprüche 14 bis 16, **dadurch ge-kennzeichnet**, dass unter der Bodenplatte (3) gegebenenfalls um vertikale Achsen drehbare Konsolen (6) mit Laufrollen (7) vorgesehen sind.

18. Werkstattwagen nach einem der Ansprüche 14 bis 17, **dadurch gekenn-zeichnet**, dass auf der Deckplatte (4) eine Arbeitsplatte (10) angeordnet ist.

19. Werkstattwagen nach einem der Ansprüche 1 bis 18, **dadurch gekenn-zeichnet**, dass zumindest ein Vertikalholm (5, 5a-c, 58, 62, 64) bereichsweise mit einem Kantenschutz versehen ist.

## Claims

1. Workshop trolley, in particular for storing tools, comprising a rollingly displaceable frame (2) having four profiled vertical struts (5, 5a, 5b, 5c, 58, 62, 64) which are each offset by 90° with respect to each other and each have peripherally undercut longitudinal grooves (11, 11 a, 11 b) for sliding blocks (12) which can be displaced therein, and said struts each also having substantially radially oriented longitudinal slots (15, 15a), **characterised in that** that each vertical strut (5, 5a-5c, 58, 62, 64) comprises longitudinal slots (15, 15a) for the edge regions (27, 33, 38, 45, 48) of wall elements (26, 32, 37, 43, 47) and longitudinal channels (16, 16a, 16b) for inserting fastening screws, which channels open into the front faces of said wall elements and are offset with respect to each other on a graduated circle (22).

2. Workshop trolley according to claim 1, **characterised in that** vertical struts (5, 5a-c, 58) having a round cross-section are provided.

3. Workshop trolley according to claim 1, **characterised in that** vertical struts (64) having a hexagonal cross-section are provided.

4. Workshop trolley according to claim 1, **characterised in that** vertical struts (62) having an octagonal cross-section are provided.

5. Workshop trolley according to any of claims 1 to 4, **characterised in that** the longitudinal channels (16, 16a, 16b) are open towards the longitudinal axis (17) of the vertical strut (5, 5a-c, 58, 62, 64).

6. Workshop trolley according to any of claims 1 to 5, **characterised in that** radial webs (18) which are offset by 120° with respect to each other and oriented towards the longitudinal axis (17) extend alongside the longitudinal channels (16, 16a, 16b).

7. Workshop trolley according to claim 6, **characterised in that** the front faces (19) of the radial webs (18), which sides are arranged on a graduated circle (20), form a receiving region for a workpiece holder.

8. Workshop trolley according to any of claims 1 to 7, **characterised in that** three longitudinal grooves (11, 11 a, 11 b) are provided, of which two longitudinal grooves (11, 11 b) are offset by 180° with respect to each other and the third longitudinal groove (11a) is offset by 90° with respect to each of the other two longitudinal grooves (11, 11 b).

9. Workshop trolley according to any of claims 1 to 8, **characterised in that** three longitudinal channels (16, 16a, 16b) are provided, of which two longitudinal channels (16, 16a) are located between the longitudinal grooves (11, 11 a and 11 a, 11 b) which are each offset by 90° with respect to each other, and the third longitudinal channel (16b) is arranged between the longitudinal grooves (11, 11 b) which are offset by 180°.

10. Workshop trolley according to any of claims 1 to 7, **characterised in that** two longitudinal grooves (11, 11b) are provided which are offset by 180° with respect to each other.

11. Workshop trolley according to any of claims 1 to 10, **characterised in that** when the vertical strut (5, 5a-c) is round, the longitudinal slots (15) extending between the longitudinal grooves (11, 11 a, 11 b) are each offset by 15° with respect to each other.

12. Workshop trolley according to any of claims 1 to 10, **characterised in that** when the vertical strut (62, 64) is hexagonal or octagonal, the longitudinal slots (15a) which open into a longitudinal side (63) are provided parallel to each other.

13. Workshop trolley according to any of claims 1 to 12, **characterised in that** the longitudinal sides (63) of the longitudinal slots (15a) are provided with longitudinal ducts (60) having a trapezoidal cross-section.

14. Workshop trolley according to any of claims 1 to 13, **characterised in that** the front faces of the vertical struts (5, 5a-c, 58, 62, 64) are screwed to a base plate (3) and a cover plate (4).

15. Workshop trolley according to any of claims 1 to 14, **characterised in that** two wall elements (32, 37; 43, 47) are provided in each case so as to extend side by side on two opposing sides (31, 42) of the frame (2), the inner wall elements (37, 47) of which sides are equipped with guides (55) for drawers (56).

16. Workshop trolley according to any of claims 1 to 15, **characterised in that** a handle (9) is attached to two adjacent vertical struts (5, 5a, 58, 62, 64).

17. Workshop trolley according to any of claims 14 to 16, **characterised in that** brackets (6) which can be rotated about vertical axes and comprise rollers (7) are optionally provided under the base plate (3).

18. Workshop trolley according to any of claims 14 to 17, **characterised in that** a worktop (10) is arranged on the cover plate (4).

19. Workshop trolley according to any of claims 1 to 18, **characterised in that** at least one vertical strut (5, 5a-c, 58, 62, 64) is provided with edge protection in regions.

## Revendications

1. Chariot d'atelier, en particulier pour la réception d'outils, qui présente un châssis (2) qui peut se déplacer par roulement avec quatre longerons verticaux profilés (5, 5a, 5b, 5c, 58, 62, 64) décalés l'un de l'autre de 90°, respectivement, qui possèdent respectivement des encoches longitudinales (11, 11a, 11b) à contre-dépouille sur la périphérie pour des coulisseaux (12) qui peuvent y coulisser ainsi que des fentes longitudinales (15, 15a) orientées sensiblement radialement, **caractérisé en ce que** chaque longeron vertical (5, 5a-5c, 58, 62, 64) présente des fentes longitudinales (15, 15a) pour les zones de bord (27, 33, 38, 45, 48) d'éléments de paroi (26, 32, 37, 43, 47) et des canaux longitudinaux (16, 16a, 16b) débouchant dans ses faces frontales et décalés l'un de l'autre sur un cercle primitif (22) pour y insérer des vis de fixation.

2. Chariot d'atelier selon la revendication 1, **caractérisé en ce que** les longerons verticaux (5, 5a-c, 58) ont une section transversale ronde.

3. Chariot d'atelier selon la revendication 1, **caractérisé en ce que** les longerons verticaux (64) ont une section transversale hexagonale.

4. Chariot d'atelier selon la revendication 1, **caractérisé en ce que** les longerons verticaux (62) ont une section transversale octogonale.

5. Chariot d'atelier selon l'une quelconque des revendications 1 à 4, **caractérisé en ce que** les canaux longitudinaux (16, 16a, 16b) débouchent sur l'axe longitudinal (17) du longeron vertical (5, 5a-c, 58, 62, 64).

6. Chariot d'atelier selon l'une quelconque des revendications 1 à 5, **caractérisé en ce que**, à côté des canaux longitudinaux (16, 16a, 16b), s'étendent des barrettes radiales (18) dirigées vers l'axe longitudinal (17) et décalées l'un de l'autre de 120°.

7. Chariot d'atelier selon la revendication 6, **caractérisé en ce que** les faces frontales (19) des barrettes radiales (18) aménagées sur un cercle primitif (20) forment une zone réceptrice pour une fixation de pièce a traivailler.

8. Chariot d'atelier selon l'une quelconque des revendications 1 à 7, **caractérisé en ce qu'**il est prévu trois encoches longitudinales (11, 11a, 11b) parmi lesquelles deux encoches longitudinales (11, 11b) sont décalées l'une de l'autre de 180° et la troisième encoche longitudinale (11a) est décalée des deux autres encoches longitudinales (11, 11b) de respectivement 90°.

9. Chariot d'atelier selon l'une quelconque des revendications 1 à 8, **caractérisé en ce qu'**il est prévu trois canaux longitudinaux (16, 16a, 16b) parmi lesquels deux canaux longitudinaux (16, 16a) se trouvent entre les encoches longitudinales (11, 11a ou 11a, 11b) décalées l'une de l'autre respectivement de 90° et le troisième canal longitudinal (16b) est agencé entre les encoches longitudinales (11, 11b) décalées de 180°.

10. Chariot d'atelier selon l'une quelconque des revendications 1 à 7, **caractérisé en ce qu'**il est prévu deux encoches longitudinales (11, 11b) décalées l'une de l'autre de 180°.

11. Chariot d'atelier selon l'une quelconque des revendications 1 à 10, **caractérisé en ce que**, dans le cas d'un longeron vertical rond (5, 5a-c), les fentes longitudinales (15) s'étendant entre les encoches longitudinales (11, 11a, 11b) sont décalées l'une de l'autre respectivement de 15°.

12. Chariot d'atelier selon l'une quelconque des revendications 1 à 10, **caractérisé en ce que**, dans le cas d'un longeron vertical hexagonal ou octogonal (62, 64), les fentes longitudinales (15a) débouchant dans une face longitudinale (63) sont prévues parallèlement l'une à côté de l'autre.

13. Chariot d'atelier selon l'une quelconque des revendications 1 à 12, **caractérisé en ce que** les faces longitudinales (63) des fentes longitudinales (15a) sont pourvues de rigoles longitudinales (60) de forme trapézoïdale en coupe transversale.

14. Chariot d'atelier selon l'une quelconque des revendications 1 à 13, **caractérisé en ce que** les faces frontales des longerons verticaux (5, 5a-c, 58, 62, 64) sont vissées à une plaque de fond (3) et à une plaque de recouvrement (4).

15. Chariot d'atelier selon l'une quelconque des revendications 1 à 14, **caractérisé en ce qu'**il est prévu, sur deux côtés (31, 42) du châssis (2) en regard l'un de l'autre, respectivement deux éléments de paroi (32, 37 ; 43, 47) qui s'étendent l'un à côté de l'autre, dont les éléments de paroi internes (37, 47) sont équipés de coulisses (55) pour tiroirs (56).

16. Chariot d'atelier selon l'une quelconque des revendications 1 à 15, **caractérisé en ce qu'**une poignée (9) est fixée sur deux longerons verticaux adjacents (5, 5a, 58, 62, 64).

17. Chariot d'atelier selon l'une quelconque des revendications 14 à 16, **caractérisé en ce qu'**il est prévu en dessous de la plaque de fond (3) éventuellement des consoles (6) pouvant tourner autour d'axes verticaux avec des roulettes (7).

18. Chariot d'atelier selon l'une quelconque des revendications 14 à 17, **caractérisé en ce qu'**une plaque de travail (10) est aménagée sur la plaque de recouvrement (4).

19. Chariot d'atelier selon l'une quelconque des revendications 1 à 18, **caractérisé en ce qu'**au moins un longeron vertical (5, 5a-c, 58, 62, 64) est pourvu par zones d'une protection des bords.
